# EUROPÄISCHE PATENTANMELDUNG

(11) **EP 3 104 500 A1**
(43) Veröffentlichungstag der Anmeldung: **14.12.2016**
(21) Anmeldenummer: 16172463.8
(22) Anmeldetag: 01.06.2016
(51) Int. Cl.: H02K 1/18, H02K 5/08, H02K 11/33

(54) **BAUGRUPPE**

(30) Priorität: 12.06.2015 DE 102015210779
(71) Anmelder: Mahle International GmbH, 70376 Stuttgart (DE)
(72) Erfinder: NIEKAMP, Peer, 71397 Leutenbach (DE)
(74) Vertreter: BRP Renaud & Partner mbB Rechtsanwälte Patentanwälte Steuerberater

(57) **Zusammenfassung**

Die Erfindung betrifft eine Baugruppe (1),
- mit einem einen Gehäuseinnenraum (2) begrenzenden Gehäuse (3), welches ein erstes Gehäuseteil (4) und ein an diesem befestigtes zweites Gehäuseteil (5) aufweist,
- mit einer im Gehäuseinnenraum (2) angeordneten und mittels einer Klemmverbindung an den beiden Gehäuseteilen (4, 5) befestigten elektrischen Maschine (6).

## Beschreibung

Die Erfindung betrifft eine Baugruppe mit einem ein erstes und ein zweites Gehäuseteil aufweisenden Gehäuse und mit einer elektrischen Maschine, die in einem vom Gehäuse begrenzten Gehäuseinnenraum angeordnet ist.

Elektrische Maschinen, etwa in Form von Elektromotoren, kommen auf vielfältige Weise in modernen Kraftfahrzeugen zum Einsatz. Um solche Elektromotoren im Fahrzeug zu montieren, ist es bekannt, diese in einem Gehäuse anzubringen, welches mittels geeigneter Befestigungsmittel am Kraftfahrzeug befestigt werden kann.

Eine derartige Anordnung aus Elektromotor und Gehäuse offenbart beispielsweise die DE 101 31 590 A1, die eine Vorrichtung zur Befestigung eines Elektromotors behandelt. Besagte Vorrichtung umfasst ein als Motorgehäuse dienendes Aufnahmegehäuse mit einer Aufnahmeöffnung, in welche der Elektromotor teilweise hineinragt. Am Aufnahmegehäuse ist ein Halteflansch zur Befestigung des Motorgehäuses am Kraftfahrzeug vorgesehen.

Die Fixierung der elektrischen Maschine in einem Gehäuse erfolgt in herkömmlicher Weise oftmals mit Hilfe von Schraubelementen, die beispielsweise in Form von selbstfurchenden Schrauben realisiert sein können.

Als nachteilig bei einer solchen Schraubverbindung erweist sich jedoch die relativ geringe Belastbarkeit der sich ergebenden kraftschlüssigen Verbindung im Dauerbetrieb des mit Hilfe des Gehäuses im Kraftfahrzeug montierten Elektromotors. Darüber gestaltet sich die Montage des Elektromotors im Gehäuse einschließlich des Verschraubens des Elektromotors am Gehäuse typischerweise als sehr aufwändig.

Es ist daher eine Aufgabe der vorliegenden Erfindung, eine verbesserte Ausführungsform für eine Baugruppe aus einem zweiteiligen Gehäuse und einer im Gehäuseinnenraum angeordneten elektrischen Maschine zu schaffen, bei welcher die oben genannten Nachteil teilweise oder gar vollständig beseitigt werden konnten.

Diese Aufgabe wird durch den Gegenstand der unabhängigen Patentansprüche gelöst. Bevorzugte Ausführungsformen sind Gegenstand der abhängigen Patentansprüche.

Grundgedanke der Erfindung ist demnach, die elektrische Maschine mittels einer Klemmverbindung an einem Gehäuse mit einem ersten und einem zweiten Gehäuseteil zu fixieren. Bei geeigneter Auslegung einer solchen Klemmverbindung kann auf die aus herkömmlichen Baugruppen bekannte Befestigung der elektrischen Maschine mittels Schraubverbindungen verzichtet werden. Ein aufwändiges Verschrauben der elektrischen Maschine mit dem Gehäuse kann folglich entfallen, so dass auch die Bereitstellung von geeigneten Schraubelementen, etwa in der Art von selbstfurchenden Gewindeschrauben, nicht mehr erforderlich ist. Dies führt zu erheblichen Kostenvorteilen bei der Herstellung der gesamten Baugruppe. Darüber hinaus weist die hier vorgestellte Klemmverbindung zum Fixieren der elektrischen Maschine am Gehäuse gegenüber herkömmlichen Schraubverbindungen den Vorteil auf, dass ein unerwünschtes Ausreißens der Schraubelemente im Betrieb der Baugruppe ausgeschlossen werden kann.

Eine erfindungsgemäße Baugruppe umfasst ein Gehäuse, welches einen Gehäuseinnenraum begrenzt. Besagtes Gehäuse umfasst dabei ein erstes Gehäuseteil und ein am ersten Gehäuseteil befestigtes zweites Gehäuseteil. Im Gehäuseinnenraum ist eine elektrische Maschine angeordnet, die mittels einer Klemmverbindung an den beiden Gehäuseteilen befestigt ist.

In einer bevorzugten Ausführungsform umfasst das Gehäuse, vorzugsweise das erste Gehäuseteil, eine Positioniereinrichtung, mittels welcher die elektrische Maschine im Gehäusesinnenraum an einer vorbestimmten Soll-Position positioniert ist. Insbesondere kann die Positioniereinrichtung dazu herangezogen werden, die elektrische Maschine im Gehäuseinnenraum zu zentrieren. Auf diese Weise kann sichergestellt werden, dass die elektrische Maschine im Zuge der Montage der Baugruppe auch an der vorgesehenen Position im Gehäuseinnenraum platziert wird, was gerade bei der Serienfertigung der Baugruppe von erheblicher Bedeutung ist. Insbesondere kann die Positioniereinrichtung derart ausgebildet sein, dass auch eine Zentrierung der elektrischen Maschine im Gehäuseinnenraum sichergestellt ist. Dies ist gerade hinsichtlich einer vorbestimmten Sollposition einer drehverstellbaren Antriebswelle der elektrischen Maschine im Gehäuseinnenraum von Bedeutung.

In einer besonders bevorzugten Ausführungsform ist die Positioniereinrichtung formschlüssig mit der elektrischen Maschine verbunden. Auf diese Weise kann eine bei herkömmlichen Schraubverbindungen nicht selten auftretende mechanische Überlastung der Verbindung zwischen Gehäuse und der elektrischen Maschine weitgehend oder sogar vollständig ausgeschlossen werden, die im Extremfall zu einer Beschädigung oder gar Zerstörung der Verbindung führen könnte.

Besonders zweckmäßig kann die Positioniereinrichtung wenigstens einen Vorsprung umfassen, welcher von einem Gehäusewandabschnitt des ersten Gehäuseteils nach innen in den Gehäuseinnenraum hinein absteht. Mittels eines solchen Vorsprungs lassen sich sowohl die elektrische Maschine als auch das zweite Gehäuseteil gezielt in einer gewünschten Soll-Position am ersten Gehäuseteil anbringen. Gerade für die elektrische Maschine bedeutet dies, dass sie ordnungsgemäß und hochgenau im Gehäuseinnenraum positioniert werden kann, was für deren ordnungsgemäße Funktion wesentlich ist. Eine besonders präzise Positionierung der elektrischen Maschine lässt sich erreichen, wenn nicht nur ein einziger, sondern zwei oder mehr Vorsprünge vorhanden sind. Besagte Vorsprünge können auch als Verdreh-Sicherung wirken, welche eine unerwünschte Drehung der elektrischen Maschine im Gehäuse verhindert.

In einer weiteren bevorzugten Ausführungsform ist das erste Gehäuseteil topfartig und das zweite Gehäuseteil als Gehäusedeckel ausgebildet. Dabei weist das erste Gehäuseteil einen Gehäusetopf mit einem nach außen vom Gehäusetopf abstehenden Gehäuseteil-Flansch auf. Am Gehäuseteil-Flansch ist der wenigstens eine Vorsprung der Positioniereinrichtung angeordnet. Eine derartige Konstruktion des Gehäuses mit Gehäusetopf und Gehäusedeckel erleichtert die Montage der elektrischen Maschine im Gehäuseinnenraum.

Bei einer vorteilhaften Weiterbildung weist der Gehäuseteil-Flansch einen radial nach außen vom Gehäusetopf abstehenden ersten Flanschabschnitt auf, der radial außen in einen zweiten Flanschabschnitt übergeht. Der zweite Flanschabschnitt steht in der axialen Richtung vom ersten Flanschabschnitt zum zweiten Gehäuseteil hin ab und ist zum Befestigen am zweiten Gehäuseteil ausgebildet. Dabei ist der wenigstens eine Vorsprung der Positioniereinrichtung im ersten Flanschabschnitt vorgesehen. Eine derartige Konstruktion ist besonders einfach, beispielsweise mittels eines Spritzguss-Verfahrens für Kunststoffe, herzustellen.

Eine besonders einfache Positionierung der elektrischen Maschine im Gehäuseinnenraum und des zweiten Gehäuseteils am ersten Gehäuseteil lässt sich in einer weiteren bevorzugten Ausführungsform erreichen, in welcher der wenigstens eine Vorsprung als Positionier-Dom ausgebildet ist.

Kostenvorteile bei der Herstellung ergeben sich bei einer weiteren bevorzugten Ausführungsform, bei welcher der wenigstens eine Positionier-Dom integral am ersten Gehäuseteil ausgeformt ist und im Wesentlichen die Geometrie eines Zylinders aufweist. In dieser Variante lässt sich das erste Gehäuseteil einschließlich des Positionier-Doms mittels eines Spritzgussverfahrens als Kunststoff-Teil herstellen. Besonders bevorzugt ist der wenigstens eine Positionier-Dom am ersten Flanschabschnitt des ersten Gehäuseteils vorgesehen. Dies erleichtert die Montage der elektrischen Maschine am ersten Gehäuseteil.

Bei einer vorteilhaften Weiterbildung der Erfindung ist am zweiten Gehäuseteil für jeden Positionier-Dom ein Aufnahme-Element angeordnet. In besagtem Aufnahme-Element ist der jeweilige am ersten Gehäuseteil vorhandene Positionier-Dom teilweise aufgenommen und auf diese Weise fixiert. Besagtes Aufnahmeelement dient also im Zusammenspiel mit dem ihm zugeordneten Positionier-Dom dazu, das zweite Gehäuseteil in wohldefinierter Position am ersten Gehäuseteil zu befestigen.

Besonders zweckmäßig kann das wenigstens eine Aufnahme-Element einen komplementär zum Positionier-Dom ausgebildeten Aufnahmekragen aufweisen, in welchem der Positionier-Dom wenigstens teilweise aufgenommen ist. Ein solcher Aufnahmekragen steht von einem Gehäusewandabschnitt des zweiten Gehäuseteils nach innen, in den Gehäuseinnenraum hinein ab. Ein solcher Aufnahmekragen ist bevorzugt integral am zweiten Gehäuse ausgeformt: In diesem Fall lässt sich auch das zweite Gehäuseteil einschließlich des wenigstens einen Aufnahmekragens mittels eines Spritzgussverfahrens als Kunststoff-Teil herstellen.

Bei einer vorteilhaften Weiterbildung bildet jeder Aufnahmekragen mit dem ihm zugeordneten Positionier-Dom eine formschlüssige Verbindung aus. Diese Maßnahme stellte eine dauerhaft stabile Befestigung der elektrischen Maschine am zweiten Gehäuseteil des Gehäuses sicher.

In einer weiteren bevorzugten Ausführungsform weist die elektrische Maschine eine um eine Drehachse drehbare Welle auf. Durch besagte Drehachse wird dabei eine axiale Richtung der elektrischen Maschine definiert. In dieser Variante umfasst die elektrische Maschine einen Hauptkörper, welcher in der axialen Richtung zum zweiten Gehäuseteil des Gehäuses in einen Flanschabschnitt übergeht, der den Hauptkörper radial nach außen überragt.

Besonders bevorzugt ist in dem Flanschabschnitt der elektrischen Maschine für jeden Positionier-Dom der Positioniereinrichtung ein Durchbruch vorgesehen, welchen der jeweilige Positionier-Dom zum Positionieren und Fixieren der elektrischen Maschine im Gehäuseinnenraum durchgreift. Im Zuge der Montage der Baugruppe werden die Positionier-Dome durch eine Relativbewegung der elektrischen Maschine zum ersten Gehäuseteil hin durch besagte Durchbrüche durchgeschoben. Auf diese Weise wird die elektrische Maschine an der dafür vorgesehenen Stelle im Gehäuseinnenraum positioniert und auch fixiert.

Gemäß einer vorteilhaften Weiterbildung bildet der wenigstens eine PositionierDom mit dem Flanschabschnitt eine formschlüssige Verbindung aus. Diese Maßnahme stellt eine dauerhaft stabile Befestigung der elektrischen Maschine am ersten Gehäuseteil sicher.

Bei einer weiteren bevorzugten Ausführungsform bildet jeder Aufnahmekragen mit dem ihm zugeordneten Positionierdom eine formschlüssige Verbindung aus. Ein unerwünschtes Ausreißens von Schraubelementen, wie dies bei einer kraftschlüssigen Schraubverbindung häufig auftritt, kann auf diese Weise verhindert werden.

Eine besonders einfache Befestigung der elektrischen Maschine am Gehäuse ermöglicht eine weitere bevorzugte Ausführungsform, bei welcher die Durchbrüche in einer äußeren Randzone des Flanschabschnitts der elektrischen Maschine angeordnet sind, die nach außen über den Hauptkörper hinausragt.

Besonders zweckmäßig kann der Flanschabschnitt der elektrischen Maschine als Flanschplatte ausgebildet sein, die zwischen das erste und das zweite Gehäuseteil geklemmt ist.

Besonders bevorzugt ist der Flanschabschnitt der elektrischen Maschine sandwichartig zwischen dem ersten Flanschabschnitt des ersten Gehäuseteils und dem Aufnahmekragen des zweiten Gehäuseteils angeordnet. Eine solche Anordnung bewirkt eine besonders stabile Klemmverbindung der elektrischen Maschine mit dem Gehäuse.

Eine dauerhaft stabile mechanische Fixierung der beiden Gehäuseteile aneinander, nachdem die elektrische Maschine im Zuge des Zusammenbaus der Baugruppe im Gehäuseinnenraum angeordnet wurde, lässt sich mittels einer Schweißverbindung realisieren. Besonders bevorzugt kommt hierfür eine Laserschweißverbindung in Betracht.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

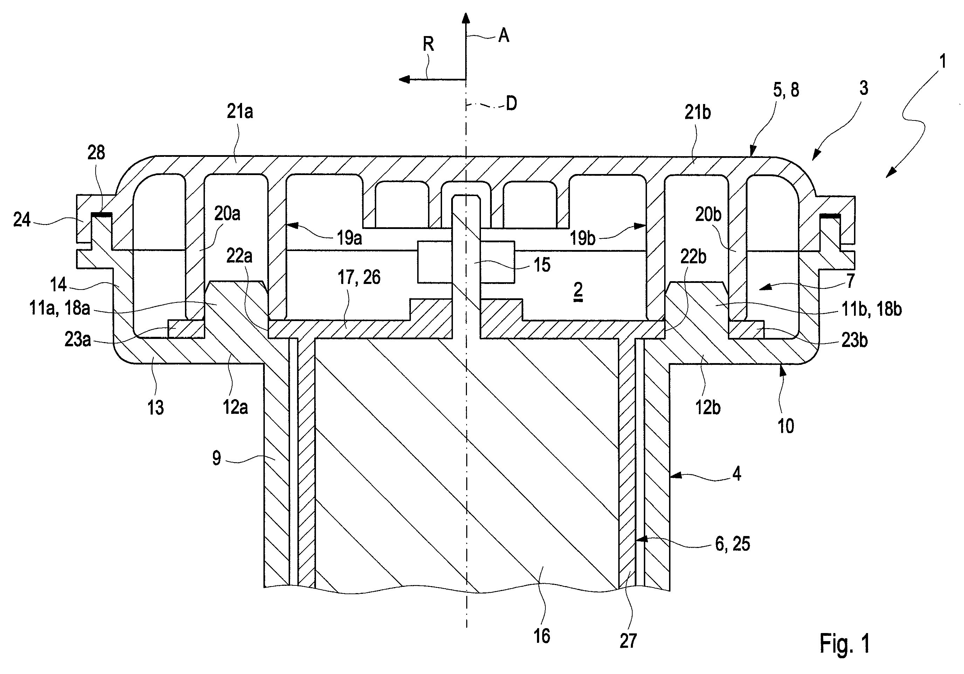

Die einzige Figur 1 zeigt ein Beispiel einer erfindungsgemäßen Baugruppe 1 in einer Schnittdarstellung. Die Baugruppe 1 umfasst ein Gehäuse 3, welches einen Gehäuseinnenraum 2 begrenzt. Das Gehäuse 3 umfasst ein erstes Gehäuseteil 4 und ein zweites Gehäuseteil 5, vorzugsweise jeweils aus einem Kunststoff. Im Gehäuseinnenraum 2 ist eine elektrische Maschine 6 angeordnet, die die mittels einer Klemmverbindung an den beiden Gehäuseteilen 4, 5 des Gehäuses 3 befestigt ist. Die elektrische Maschine 6 kann ein Elektromotor 25, aber auch ein Generator oder eine Kombination aus beidem, ein sogenannter Generator-Motor, sein.

Der Aufbau der elektrischen Maschine 6 ist in Figur 1 in stark vereinfachter Form dargestellt. Demnach weist die elektrische Maschine 6 eine um eine Drehachse D drehbare Welle 15 auf. Durch die Drehachse D wird eine axiale Richtung A definiert. Weiterhin umfasst die elektrische Maschine 6 einen Hauptkörper 16, welcher in der axialen Richtung A zum zweiten Gehäuseteil 5 des Gehäuses 3 in einen Flanschabschnitt 17 übergeht, welcher den Hauptkörper 16 radial nach außen überragt. Der Hauptkörper 16 gibt in der Darstellung der Figur 1 die zentralen Komponenten der elektrischen Maschine 6 wie beispielsweise einen Stator und einen Rotor mit jeweiligen magnetischen Elementen bzw. elektrischen Spulen (nicht gezeigt) wieder und kann ein separates Motorgehäuse 27 aufweisen. Der Flanschabschnitt 17 kann in der Art einer Flanschplatte 26 ausgebildet sein.

Entsprechend Figur 1 ist das zweite Gehäuseteil 5 als Gehäusedeckel 8 ausgebildet, und das erste Gehäuseteil 4 ist topfartig ausgebildet. Das erste Gehäuseteil 4 umfasst einen in Figur 1 nur teilweise dargestellten Gehäusetopf 9 mit einem nach außen vom Gehäusetopf 9 abstehenden Gehäuseteil-Flansch 10. Wie Figur 1 erkennen lässt, ist am ersten Gehäuseteil 4 des Gehäuses 3 eine Positioniereinrichtung 7 vorgesehen. Mittels besagter Positioniereinrichtung 7 wird die elektrische Maschine 6 beim Zusammenbau der Baugruppe 1 im Gehäuseinnenraum 2 an einer vorgegebenen Soll-Position positioniert. Eine solche Positionierung kann eine Zentrierung der Antriebswelle 15 der elektrischen Maschine bezüglich einer radialen Richtung R quer zur axialen Richtung A, aber auch eine Positionierung entlang der axialen Richtung A einschließen.

Der Gehäuseteil-Flansch 10 weist einen bezüglich der axialen Richtung A radial nach außen vom Gehäusetopf 9 abstehenden ersten Flanschabschnitt 13 auf, der radial außen in einen zweiten Flanschabschnitt 14 übergeht. Der zweite Flanschabschnitt 14 steht vom ersten Flanschabschnitt 13 entlang der axialen Richtung A zum zweiten Gehäuseteil 5 hin ab. Der zweite Flanschabschnitt 14 dient primär zum Befestigen des ersten Gehäuseteils 4 am zweiten Gehäuseteil 5. Hierzu kann das zweite Gehäuseteil 5 in einem umlaufenden Kontaktabschnitt 24 der beiden Gehäuseteile 4, 5 mittels einer Schweißverbindung 28 an das erste Gehäuseteil 4 gefügt werden. Vorzugsweise ist besagte Schweißverbindung eine Laserschweißverbindung.

Im Beispielszenario umfasst die Positioniereinrichtung 7 zwei Vorsprünge 11a, 11 b, welche beide von einem Gehäusewandabschnitt 12a bzw. 12b des ersten Gehäuseteils 4 nach innen in den Gehäuseinnenraum 2 hinein abstehen. In Varianten des Beispiels kann auch eine andere Anzahl an Vorsprüngen 11 a, 11 b vorgesehen sein. Die beiden Gehäusewandabschnitte 12a, 12b sind Teil des ersten Flanschabschnitts 13, so dass die beiden Vorsprünge 11 a, 11 b beide im ersten Flanschabschnitt 13 des ersten Gehäuseteils 4 angeordnet sind. Die beiden Vorsprünge 11 a, 11 b sind jeweils dom-artig in Form sogenannter Positionier-Dome 18a, 18b ausgebildet. Jeder der beiden Positionier-Dome 18a, 18b der Figur 1 ist vorzugsweise integral am ersten Flanschabschnitt 13 des ersten Gehäuseteils 4 ausgeformt und weist im Wesentlichen die Geometrie eines Zylinders auf.

Am zweiten Gehäuseteil 5 ist für jeden am ersten Gehäuseteil 4 vorhandenen Positionier-Dom 18a, 18b ein Aufnahmeelement 19a, 19b ausgeformt. Im Beispiel der Figur 1 mit zwei Positionier-Domen 18a, 18b sind folglich zwei Aufnahmeelemente 19a, 19b vorgesehen. Wie Figur 1 erkennen lässt, ist der erste PositionierDom 18a teilweise in dem ersten Aufnahme-Element 19a und der zweite Positionier-Dom 18b teilweise in dem zweiten Aufnahme-Element 18b aufgenommen.

Die Aufnahme-Elemente 19a, 19b weisen jeweils einen komplementär zum Positionier-Dom ausgebildeten Aufnahmekragen 20a, 20b auf, in welchem der jeweilige Positionier-Dom 18a, 18b teilweise aufgenommen und fixiert ist. Die beiden Aufnahmekrägen 20a, 20b stehen von einem Gehäusewandabschnitt 21 a bzw. 21 b des zweiten Gehäuseteils 5 nach innen, in den Gehäuseinnenraum 2 hinein ab. Die beiden Aufnahmekrägen 20a, 20b und die beiden Positionier-Dome 18a, 18b bilden miteinander eine formschlüssige Verbindung aus.

Im Flanschabschnitt 17 der elektrischen Maschine 6 ist für jeden Positionier-Dom 18a, 18b der Positioniereinrichtung 7 ein Durchbruch 22a, 22b vorgesehen, welchen der jeweilige Positionier-Dom zum Fixieren der elektrischen Maschine 6 durchgreift. Die Positionier-Dome 18a, 18b dienen zur korrekten Positionierung der elektrischen Maschine 6 bzw. des Elektromotors 25 im Gehäuseinnenraum 2. Insbesondere lässt sich die elektrische Maschine 6 mittels der Positionier-Dome 18a, 18b im Gehäuseinnenraum zentrieren. Hierzu bildet die Positioniereinrichtung 7 in Form der Positionier-Dome 18a, 18b mit dem Flanschabschnitt 17 der elektrischen Maschine 6 eine formschlüssige Verbindung.

Die Durchbrüche 22a, 22b sind dabei in einer äußeren Randzone 23a, 23b des Flanschabschnitts 17 der elektrischen Maschine 6 angeordnet, der in der radialen Richtung R nach außen über den Hauptkörper 16 hinausragt. Der Flanschabschnitt 17 der elektrischen Maschine 6 bzw. des Elektromotors 25 ist dabei sandwichartig zwischen dem ersten Flanschabschnitt 13 des ersten Gehäuseteils 4 und den Aufnahmekrägen 20a, 20b des zweiten Gehäuseteils 5 angeordnet. Zur stabilen Fixierung der elektrischen Maschine 6 ist deren Flanschabschnitt 17 zwischen das erste und das zweite Gehäuseteil 4, 5 geklemmt.

## Patentansprüche

1. Baugruppe (1),
- mit einem einen Gehäuseinnenraum (2) begrenzenden Gehäuse (3), welches ein erstes Gehäuseteil (4) und ein an diesem befestigtes zweites Gehäuseteil (5) aufweist,
- mit einer im Gehäuseinnenraum (2) angeordneten und mittels einer Klemmverbindung an den beiden Gehäuseteilen (4, 5) befestigten elektrischen Maschine (6).

2. Baugruppe nach Anspruch 1,
**dadurch gekennzeichnet, dass**
das Gehäuse (3), vorzugsweise das erste Gehäuseteil (4), eine Positioniereinrichtung (7) aufweist, mittels welcher die elektrische Maschine (6) im Gehäuseinnenraum (2) an einer vorbestimmten Soll-Position positioniert, insbesondere zentriert, ist.

3. Baugruppe nach Anspruch 2,
**dadurch gekennzeichnet, dass**
die Positioniereinrichtung (7) formschlüssig mit der elektrischen Maschine (6) verbunden ist.

4. Baugruppe nach Anspruch 2 oder 3,
**dadurch gekennzeichnet, dass**
die Positioniereinrichtung (7) wenigstens einen Vorsprung (11a, 11 b), vorzugsweise wenigstens zwei Vorsprünge (11a, 11 b), umfasst, welcher von einem Gehäusewandabschnitt (12a, 12b) des ersten Gehäuseteils (4) nach innen in den Gehäuseinnenraum (2) hinein absteht.

5. Baugruppe nach Anspruch 2 oder 3,
**dadurch gekennzeichnet, dass**
das erste Gehäuseteil (4) topfartig und das zweite Gehäuseteil (5) als Gehäusedeckel (8) ausgebildet ist,
wobei das erste Gehäuseteil (4) einen Gehäusetopf (9) mit einem nach außen vom Gehäusetopf (9) abstehenden Gehäuseteil-Flansch (10) aufweist, an welchem der wenigstens eine Vorsprung (11 a, 11 b) der Positioniereinrichtung (7) angeordnet ist.

6. Baugruppe nach Anspruch 5,
**dadurch gekennzeichnet, dass**
der Gehäuseteil-Flansch (10) einen radial nach außen, vom Gehäusetopf (9) abstehenden ersten Flanschabschnitt (13) aufweist, der radial außen in einen zweiten Flanschabschnitt (14) übergeht, welcher in der axialen Richtung (A) zum zweiten Gehäuseteil (5) hin vom ersten Flanschabschnitt (13) absteht und zum Befestigen am zweiten Gehäuseteil (5) ausgebildet ist,
wobei der wenigstens eine Vorsprung (11a, 11 b) im ersten Flanschabschnitt (13) angeordnet ist.

7. Baugruppe nach einem der Ansprüche 4 bis 6,
**dadurch gekennzeichnet, dass**
der wenigstens eine Vorsprung (11 a, 11 b) als Positionier-Dom (18a, 18b) ausgebildet ist.

8. Baugruppe nach Anspruch 7,
**dadurch gekennzeichnet, dass**
der Positionier-Dom (18a, 18b) integral am ersten Gehäuseteil (4), insbesondere am ersten Flanschabschnitt (13) des ersten Gehäuseteils (4), ausgeformt ist und im Wesentlichen die Geometrie eines Zylinders aufweist.

9. Baugruppe nach Anspruch 7 oder 8,
**dadurch gekennzeichnet, dass**
am zweiten Gehäuseteil (5) für jeden Positionier-Dom (18a, 18b) ein Aufnahme-Element (19a, 19b) angeordnet ist, in welchem der jeweilige PositionierDom (18a, 18b) wenigstens teilweise aufgenommen und fixiert ist.

10. Baugruppe nach Anspruch 9,
**dadurch gekennzeichnet, dass**
das wenigstens eine Aufnahmeelement (19a, 19b) einen komplementär zum Positionier-Dom (18a, 18b) ausgebildeten Aufnahmekragen (20a, 20b) aufweist, in welchem der Positionier-Dom (18a, 18b) wenigstens teilweise aufgenommen ist und der von einem Gehäusewandabschnitt (21 a, 21 b) des zweiten Gehäuseteils (5) nach innen, in den Gehäuseinnenraum (2) hinein absteht.

11. Baugruppe nach Anspruch 10,
**dadurch gekennzeichnet, dass**
jeder Aufnahmekragen (20a, 20b) mit dem ihm zugeordneten Positionier-Dom (18a, 18b) eine formschlüssige Verbindung ausbildet.

12. Baugruppe nach Anspruch 10 oder 11,
**dadurch gekennzeichnet, dass**
der wenigstens eine Aufnahmekragen (20a, 20b) integral am zweiten Gehäuseteil (5) ausgeformt ist.

13. Baugruppe nach einem der vorhergehenden Ansprüche,
**dadurch gekennzeichnet, dass**
das erste und das zweite Gehäuseteil (4, 5) mittels eines Spritzgussverfahrens hergestellte Kunststoff-Teile sind.

14. Baugruppe nach einem der vorhergehenden Ansprüche,
**dadurch gekennzeichnet, dass**
die elektrische Maschine (6) eine um eine Drehachse (D) drehbare Welle (15) aufweist, wobei die Drehachse eine axiale Richtung (A) der elektrischen Maschine (6) definiert,
wobei die elektrische Maschine (6) einen Hauptkörper (16) umfasst, welcher in der axialen Richtung (A) zum zweiten Gehäuseteil (5) des Gehäuses (3) hin in einen Flanschabschnitt (17) übergeht,

15. Baugruppe nach Anspruch 14,
**dadurch gekennzeichnet, dass**
der Flanschabschnitt (17) den Hauptkörper (16) radial nach außen überragt, wobei in dem Flanschabschnitt (17) der elektrischen Maschine (6) für jeden Positionier-Dom (18a, 18b) der Positioniereinrichtung (7) ein komplementär zum jeweiligen Positionier-Dom (18a, 18b) ausgebildeter Durchbruch (22a, 22b) vorgesehen ist, welchen der jeweilige Positionier-Dom (18a, 18b) zum Fixieren der elektrischen Maschine (6) durchgreift.

16. Baugruppe nach Anspruch 14 oder 15,
**dadurch gekennzeichnet, dass**
der Positionier-Dom (18a, 18b) mit dem Flanschabschnitt (17) eine formschlüssige Verbindung ausbildet.

17. Baugruppe nach einem der Ansprüche 14 bis 16,
**dadurch gekennzeichnet, dass**
der Flanschabschnitt (17) der elektrischen Maschine (6) als Flanschplatte (26) ausgebildet ist, die zwischen das erste und das zweite Gehäuseteil (4, 5) geklemmt ist.

18. Baugruppe nach einem der Ansprüche 14 bis 17,
**dadurch gekennzeichnet, dass**
der Flanschabschnitt (17) der elektrischen Maschine (6) sandwichartig zwischen dem ersten Flanschabschnitt (13) des ersten Gehäuseteils (4) und dem Aufnahmekragen (20a, 10b) des zweiten Gehäuseteils (5) angeordnet ist.

19. Baugruppe nach einem der vorhergehenden Ansprüche,
**dadurch gekennzeichnet, dass**
das zweite Gehäuseteil (5) mittels einer Schweißverbindung, insbesondere mittels einer Laserschweißverbindung, an das erste Gehäuseteil (4) gefügt ist.
